(19) Europäisches Patentamt
European Patent Office
Office européen des brevets

(11) Publication number: 0 083 813 B1

# (12) EUROPEAN PATENT SPECIFICATION

(45) Date of publication of patent specification: 09.04.86

(51) Int. Cl.[4]: C 08 L 63/00, C 08 G 59/44, C 08 G 59/50, C 08 G 59/68

(21) Application number: 82201566.5

(22) Date of filing: 09.12.82

## (54) Reaction injection moulding process employing epoxy resin compositions.

(30) Priority: 14.12.81 US 330413
14.12.81 US 330414

(43) Date of publication of application:
20.07.83 Bulletin 83/29

(45) Publication of the grant of the patent:
09.04.86 Bulletin 86/15

(84) Designated Contracting States:
DE FR GB IT

(56) References cited:
EP-A-0 029 683
CH-A- 457 846
FR-A-1 408 745
FR-A-2 229 728
FR-A-2 290 468
US-A-2 705 223
US-A-3 492 269
US-A-4 284 753

(73) Proprietor: SHELL INTERNATIONALE RESEARCH MAATSCHAPPIJ B.V.
Carel van Bylandtlaan 30
NL-2596 HR Den Haag (NL)

(72) Inventor: de la Mare, Harold Elison
10503 Idlebrook Drive
Houston Texas 77070 (US)
Inventor: Brownscombe, Thomas Fairchild
2737 Amherst
Houston Texas 77005 (US)

(74) Representative: Aalbers, Onno et al
P.O. Box 302
NL-2501 CH The Hague (NL)

EP 0 083 813 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the application of certain heat-curable epoxy compositions in a reaction injection moulding process.

The use of urethane technology in reaction injection (RIM) moulding systems is well-known. In RIM technology the mixed urethane foam ingredients are injected into a mould cavity through a runner and a gate at low pressure, usually about 0.14 MPa, where they react quickly to produce moulded articles. Large parts can thus be produced very quickly at relatively low mould pressures. Such elastomers normally comprise the reaction product of an aromatic polyisocyanate, a polyol and a chain-extending agent.

Moulding compositions of epoxy resins by contrast are usually prepared by placing an epoxy composition comprising an epoxy resin and curing agent in a suitable mould, with or without reinforcement, and curing the composition under high pressure and at elevated temperature. These cured epoxy compositions exhibit good physical and chemical properties. It would be desirable, however, to be able to produce cured articles at a faster rate from epoxy compositions which exhibit physical and mechanical properties which are equal or superior to standard casting resins.

US—A—3 492 289 is directed to a process for hardening epoxy resins using certain inorganic metal salt accelerators such as NaCl or NaBr, for the curing of epoxy resins. These cured compositions cannot be used in RIM applications because of the relatively slow gel times.

According to the present invention there is provided the application of heat-curable compositions comprisiing:

(1) an epoxy compound having on average more than one epoxy group per molecule;
(2) a curing amount of at least one amino compound containing at least three amino hydrogen atoms per molecule;
(3) a catalytic amount of a Group I or Group II metal salt selected from the group consisting of nitrates, iodides, thiocyanates, alkoxides, and perchlorates, and sulphonates; and
(4) a polyalkylene ether glycol,

in a reaction injection moulding process.

In a preferred embodiment of the invention the metal salt is selected from the group consisting of nitrates, iodides, thiocyanates, alkoxides and perchlorates and the compositions employed additionally include:

(5) a miscible amount of at least one ethylenically unsaturated monomer and
(6) a peroxide free-radical initiator.

The background prior art includes:

(a) FR—A—2 229 728 which is concerned with epoxy resin compositions comprising a curing agent and a curing accelerator which is an amine-soluble alkaline salt, e.g. nitrates and thiocyanates of alkali metals,

(b) FR—A—2 290 468, which relates to epoxy resin compositions comprising a cycloaliphatic or aromatic polyamine curing agent and a perchlorate of Mg, Ca, Zn, Mn, Co or Ni, as curing accelerator,

(c) US—A—3 492 269, which provides epoxy resin compositions comprising an amine curing agent and a curing accelerator selected from certain metal salts, e.g. KCl, KBr, $Na_3PO_3$, $SnCl_2$, $BaCl_2$ or $Ca(NO_3)_2$.

These known compositions have been proposed for application as casting resins or potting systems, nothing has been said in these three references about the possible potential of applying the compositions in reaction injection moulding processes.

Suitable epoxy compounds for inclusion in compositions used in the invention comprise those compounds containing on average at least one epoxy group per molecule, i.e. at least one group.

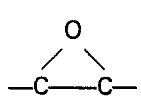

These epoxy compounds may be saturated or unsaturated, aliphatic, cycloaliphatic, aromatic or heterocyclic and may be substituted if desired with non-interfering substituents, such as halogen atoms, hydroxyl groups and ether radicals. They may also be monomeric or polymeric.

Various examples of liquid epoxy compounds which may be used in the compositions used in the invention are given in US—A—2 633 458. Other suitable epoxy compounds are disclosed in US—A—3 373 221 and 3 377 406.

Preferred epoxy compounds are the glycidyl polyethers of polyhydric phenols and polyhydric alcohols, especially the glycidyl polyethers of 2,2-bis(4-hydroxyphenyl)propane having an average molecular weight between 300 and 3,000 and an epoxide equivalent weight between 140 and 2,000.

Other suitable epoxy compounds include those compounds derived from polyhydric phenols and

having at least one vicinal epoxy group wherein the carbon-to-carbon bonds within the six-membered ring are saturated. Examples of such epoxy compounds are described in US—A—3 336 241.

Preferred saturated epoxy compounds are the hydrogenated glycidyl ethers of 2,2-bis(4-hydroxyphenyl)propane, sometimes called the diglycidyl ethers of 2,2-bis(4-cyclohexanol)propane.

Other examples of suitable epoxy compounds are the glycidyl novolac resins, e.g. the phenolaldehyde condensates described in US—A—2 658 885.

A particularly preferred epoxy compound comprises a glycidyl polyether of a polyhydric phenol, preferably (a) a diglycidyl ether of 2,2-bis(3-hydroxyphenyl)propane optionally blended with (b) a diglycidyl ether of hydrogenated 2,2-bis(4-hydroxyphenyl)propane. Conveniently the weight ratio of (a):(b) is in the range 50:50 to 80:20, with a 75:25 blend being preferred.

The amino compound in the composition may conveniently be one or more of an aliphatic or cycloaliphatic polyfunctional amine or a polyamide.

Suitable polyfunctional amines include amines of the following general structure:

$$NH_2R\text{-}(NH\text{—}R)_x\text{-}NH_2$$

wherein each R is an alkylene, arylene or alkarylene radical of up to 8 carbon atoms and x has a value of from 0 to 10, and preferably 1 to 3.

Examples of suitable such polyfunctional amines include diethylenetriamine (DETA) and triethylene tetramine (TETA) as well as cycloaliphatic diamines such as cyclohexane diamine and 4,4'-diaminodicyclohexylmethane, and aromatic polyamines such as methylene dianiline (MDA), and *meta*-phenylenediamine. The cycloaliphatic diamines are preferred, cyclohexane diamine and 4,4'-diaminodicyclohexylmethane being most preferred polyfunctional amines.

Other suitable polyfunctional amines are the polyoxypropyleneamines (aliphatic, terminally-branched, primary di- and tri-amines, structurally derived from polypropylene glycols and triols) commercially available under the trade mark "Jeffamine". A typical structure is as follows:

$$H_2NCH(CH_3)CH_2\text{-}(OCH_2CH(CH_3))_x\text{-}NH_2$$

wherein x has an approximate value of from about 2.5 to about 3.5.

Polyamides which are suitable for use in the present compositions may be saturated or unsaturated as well as monomeric or polymeric.

Polyamides which are especially useful in the present compositions are those derived from polyermic fatty acids and aliphatic polyamines. Polyamides of this type are disclosed in US—A—2 450 940. Typically, these polyamides are those made from polymeric fatty acids containing up to about 22 carbon atoms in the monomeric acid with ethylene diamine, diethylene triamine or triethylene tetramine. It will be appreciated that polyamide resins may have terminal amine groups or terminal carboxyl groups or contain molecules in which some of the terminal groups are amine groups while others are carboxyl groups.

The polymeric fatty acids employed in preparing the polyamides are those resulting from the polymerization of drying or semi-drying oils, or the free acids or simple aliphatic alcohol esters of such acids. Suitable drying or semi-drying oils include soybean, linseed, tung, perilla, oiticica, cottonseed, corn, tall, sunflower and safflower oil, and dehydrated castor oil. In the polymerization process for the preparation of the polymeric fatty acids, the fatty acids with sufficient double bond functionality combine for the most part, probably by a Diels-Alder reaction, to provide a mixture of dibasic and higher polymeric acids. The acids with insufficient functionality to react remain as monomers and may be wholly or partially removed, for example by distillation. The residue after distillation consists of the desired polymeric acids and this mixture is used for the preparation of the polyamide resin. In place of this method of polymerization, any other method of polymerization may be employed whether the resultant polymer possesses residual unsaturation or not. The term "polymeric fatty acids" as used herein, is intended to include the polymerized mixture of acids obtained, which mixture usually contains a predominant portion of dimeric acids, a smaller quantity of trimeric and higher polymeric acids, and some residual monomer.

These polymeric fatty acids may be reacted with a variety of aliphatic polyamines for the production of the polyamide. The amidification reaction may be carried out under the usual conditions employed for this purpose, as will be evident from the examples. Polyamides of this type generally have molecular weights varying from 1,000 to 10,000 and are resistant to the corrosive action of water, alkali, acids, oils, greases, and organic solvents. The melting points vary, depending upon the reactants and the reaction conditions. Where aliphatic diamines, such as ethylene diamine, are employed for the preparation of the polyamide the resin typically melts within the approximate range of 100—120°C, and more usually within the range of 100—105°C.

Higher melting polyamide resins, for example melting within the range of 130—215°C, may be made by employing a mixture of polymeric fatty acids and other polybasic acids, the latter having at least two carboxyl groups which are separated by at least 3 and not more than 8 carbon atoms. Typical of these polybasic acids are the aliphatic acids, e.g. glutaric, adipic, pimelic, suberic, azelaic, and sebacic acids, and the aromatic acids, e.g. terephthalic and isophthalic acids. The melting point of the copolymer resin may

vary within the range previously indicated, depending upon the particular reactants, relative ratios thereof, as well as the reaction conditions.

Low melting polyamide resins melting within the approximate range of 25—90°C may be prepared from polymeric fatty acids and aliphatic polyamines having at least 3 atoms intervening between the amine groups principally involved in the amidification reaction. These three atoms may be carbon atoms or hetero atoms. Typical of the polyamines which may be used are diethylene triamine, triethylene tetramine, tetraethylene pentamine, 1,4-di-aminobutane, 1,3-diaminobutane, hexamethylene diamine, 3-(N-isopropylamino)propylamine, and 3,3'-imino-bis-propylamine. A preferred group of these low melting polyamides are derived from polymeric fatty acids, and diethylene triamine and are liquid at ambient temperature.

Suitable such polyamides are commercially available under the trade designation of "Versamid" (registered Trade Mark) polyamide resins, e.g. "Versamid" 140 ("V-140") and are amber-coloured polyamides having a molecular weight ranging from about 3,000 to about 10,000 and a softening point from below ambient temperature to 190°C and prepared by condensing polymerized unsaturated fatty acids (e.g., dilinoleic acid) with aliphatic polyamines, such as diethylene triamine or triethylene tetramine. Such adducts of a polymeric fatty acid and triethylene tetramine or diethylene triamine are particularly preferred polyamides.

The preparation of such "Versamid" polyamide resins is well-known and by varying the acid and/or the functionality of the polyamine, a great variety of viscosities, molecular weights and levels of active amino groups spaced along the resin molecule can be obtained. Typically, the "Versamid" polyamide resins have amine values from 50 to 400; Gardner colour (max.) of 8—10; and viscosities of from 0,1 to 3 Pa.s.

Although useful for some applications, the polyamides *per se* are less preferred than the polyfunctional amines; however, blends of polyamides with polyfunctional amines are more preferred. Preferred polyfunctional amines for such blends are the aliphatic and cycloaliphatic amines, especially the cycloaliphatic diamines, such as diaminocyclohexane and 4,4'-diaminodicyclohexylmethane. Preferably, the amount of amino compound employed will be that amount required to furnish one amino hydrogen per epoxy group (stoichiometric amount), although up to about 50% excess of epoxy compound may be employed and up to about 100% excess of amino compound may be employed.

The preferred Group I and Group II metal salts are lithium, calcium and magnesium salts with calcium salts being especially preferred. Nitrates, iodides and perchlorates are preferred salts of such metals.

Accordingly, preferred catalyst salts include lithium iodide, lithium nitrate, calcium nitrate, calcium perchlorate and magnesium nitrate. Excellent results are obtained with calcium nitrate.

In general, a catalytic amount of salt is employed. For most applications, the catalyst will be used from 0.05 to 5.0 parts by weight per 100 parts of epoxy compound (phr), with from 0.1 to 3.0 phr being preferred and from 0.5 to 2.0 phr being especially preferred.

The polyalkylene ether glycol preferably has an average molecular weight between 200 and 1500 and is more preferably a polyethylene glycol having a molecular weight of from 200 to 600 or a polypropylene glycol having an average molecular weight between 400 and 1,000. Polyethylene glycols are most preferred.

The amount of polyalkylene ether glycol will vary somewhat depending upon the particular epoxy compound, amino compound and metal salt used. However, the weight ratio of polyalkylene ether glycol to metal salt may conveniently range from 1:3 to 2:1. For most applications amounts of polyalkylene ether glycol ranging from 0.1 to 3 parts by weight per 100 parts epoxy are advantageous.

Preferred ethylenically unsaturated monomers are the unsaturated aromatic monomers such as styrene, alpha-methyl styrene; halo-substituted styrenes such as chlorostyrene; nitro-substituted styrenes such as nitrostyrene; alkyl-substituted styrenes such as tertiary-butyl styrene; divinylbenzene, vinyl toluene; 2-vinyl pyridine; N-vinyl pyrrolidone, and vinyl naphthalene. Especially preferred is styrene, optionally blended with divinylbenzene.

Other suitable monomers, which are preferably blended with styrene, include (1) esters of ethylenically unsaturated carboxylic acids, (2) cyano-containing unsaturated compounds, (3) alkyl-containing compounds, and (4) olefins or diolefins and (5) alkyl phenols.

Suitable unsaturated monocarboxylic acid esters include the alkyl esters of ethylenically unsaturated acids such as acrylic acid, methacrylic acid, crotonic acid, alpha-phenylacrylic acid, alpha-cyclohexylacrylic acid, maleic acid, alpha-chloromaleic acid, itaconic acid, citraconic acid, fumaric acid, cyanoacrylic acid and methoxyacrylic acid. Preferred acids are acrylic acid and methacrylic acid. Accordingly, suitable such esters include methyl methacrylate, ethyl acrylate, butyl acrylate, butyl methacrylate, isobutyl methacrylate, pentaerythritol triacrylate and trimethylolpropane trimethylacrylate.

Suitable cyano compounds include acrylonitrile and methacrylonitrile.

Suitable allyl monomers include diallyl phthalate and triallyl isocyanurate.

Suitable alkyl phenols include nonyl phenol and lower and higher homologues, and alkylated bisphenol acetone or other diphenols. Other suitable comonomers include the unsaturated aliphatic compounds, such as the olfins and diolefins. Operable such olefins and diolefins include ethylene, propylene, butylene, amylene, butadiene, isoprene, vinyl hexane, vinyl cyclohexanes, vinyl cyclopentane, vinyl cyclopentene, norbornadiene, cyclopentadiene and cyclopentadiene dimer. It will be appreciated that since some of these monomers are normally gases at ambient temperatures and pressures, their use

dictates that the compositions be formulated and cured under pressure conditions. Accordingly, they may be useful in reaction injection moulding processes.

The ethylenically unsaturated monomer(s) is/are preferably included in amounts ranging from 10 to 200 parts by weight of monomer(s) per 100 parts by weight of epoxy compound.

The peroxide free-radical initiator is selected as one which is compatible with the amino compound, i.e. one which will not react with the amino compound. A simple test for compatibility comprises mixing a sample of the amino compound, preferably together with the epoxy compound, with a sample of peroxide free-radical initiator at a temperature below the decomposition temperature of the peroxide. If there is no appearance of an odour or colour, or any other evidence, e.g., spectroscopic, of decomposition, then the peroxide is deemed to be compatible with the amino compound.

Preferred peroxides are the sterically hindered peroxyesters such as tertiary-butyl peroxybenzoate, 2,5-dimethyl-2,5-bis-(2-ethyl hexanoylperoxy)hexane (e.g., "LUPERSOL 256") (trade mark), t-butyl peroxy neodecanoate, t-butyl peroxy pivalate, t-butyl peroctoate, t-butyl peroxy isobutyrate, t-butyl peroxy maleic acid and 5-cumyl peroxy neodecanoate and dialkyl peroxides such as di-tertiary-butyl peroxide, di-tertiary-butyl-2,5-dimethyl-2,5-peroxyhexane. Particularly preferred peroxides are t-butyl peroxy benzoate and 2,5-dimethyl-2,5-bis(2-ethyl hexanoyl peroxy)hexane.

The peroxide free-radical initiator is employed in an amount which is sufficient to effect the desired cure or cross-linking of the ethylenically unsaturated monomer. Preferably, the amount of peroxide free-radical initiator will vary from 0.25% to 15% by weight based on the ethylenically unsaturated monomer.

The selection of the amino compound and the peroxide free-radical initiator should preferably be one wherein the particular amino compound tends to start the cure of the epoxy groups before the peroxide initiates polymerization of the ethylenically unsaturated monomer at the temperatures employed in curing the composition.

RIM techniques and equipment are well-known. For illustration a preferred process of the invention is outlined below.

The epoxy compound and the metal salt and polyalkylene ether glycol (and, where appropriate, some of the ethylenically unsaturated monomer and peroxide) are mixed and added to the resin reservoir of an RIM apparatus, and the amino compound (and, where appropriate, the remaining ethylenically unsaturated monomer) is added to the curative reservoir, although in some cases the metal salt can be added to the curative reservoir. In general, the resin mixture is maintained at 45°C (25°C when monomer is included) to 70°C and the curative amino compound is brought to 30°C (20°C whan monomer is included) to 50°C. The temperatures are representative and typical only and the temperature range may be expanded according to the particular components employed. Then by means of a dispensing and metering means, the two streams from the reservoir are brought under high pressure into a mixing head (6.9 MPa to 20.7 MPa, 1000 to 3000 psi, preferably 8.3 MPa to 14 MPa, 1200 to 2000 psi) (or, when monomer is included, 3.45 to 20.7 MPa, 500 to 3000 psi, preferably 3.45 to 10.4 MPa, 500 to 1500 psi). The mixing head is opened on a predetermined signal and the two streams flow together under turbulent mixing conditions and flow directly into the mould. After a suitable time, e.g. 30 to 300 seconds, at 80°C (100°C when monomer is present) to 160°C, the mould is opened and the article removed.

Of course, other materials may be mixed or added to one or both of the reaction streams, including plasticizers, stabilizers, extenders, oils, resins, plastics, elastomers, tars, asphalts, pigments, reinforcing agents, thixotropic agents, anti-oxidants and mould release agents. In addition various kinds of continuous stand or chopped strand glass, carbon fibre, Kevlar® or a "prepreg" may be preplaced in the mould before the streams from the mixing head are introduced into the mould.

The invention will be further understood from the following illustrative Examples, in which, unless otherwise indicated, parts and percentages in the examples are parts and percentages by weight.

"Epoxy Resin A" is a liquid glycidyl polyether of 2,2-bis(4-hydroxyphenyl)propane having an epoxide equivalent weight of 175—190 and an average molecular weight of about 350.

"Epoxy Resin B" is a liquid glycidyl polyether of hydrogenated 2,2-bis(4-hydroxyphenyl)propane having an epoxy equivalent weight of about 234 and an average molecular weight of about 568.

"PACM-20" is a 100% isomeric mixture of 4,4'-diaminodicyclohexyl methanes containing 20% of the trans, trans-isomer. It is derived from the hydrogenation of methylene dianiline.

"V-140" is a commercial long chain amidoamine derived by reacting a partially dimerized $C_{18}$-unsaturated straight chain fatty acid and triethylene tetramine in 1:2 molar ratio.

"PEG-400" is polyethylene glycol having an average molecular weight of about 400.

Example I

This example illustrates a typical reaction injection moulding (RIM) process in accordance with the invention.

One hundred parts by weight of Epoxy Resin A containing ≤1 part by weight (phr) of $Ca(NO_3)_2$ (added as ≤1.44 pbw of $Ca(NO_3)_2 . 4H_2O$) and 1 phr of PEG-400 were added to the resin reservoir of a RIM apparatus. The $Ca(NO_3)_2 . 4H_2O$ was dissolved or dispersed in the resin by heating the resin to 50°—60°C and adding the metal salt while stirring. The PEG-400 was added after about 30 minutes at 50°—60°C and the resin blend cooled to room temperature.

Then 28 parts by weight of PACM-20 were added to the curative reservoir.

The resin was then brought to 45° to 75°C in the resin reservoir and the curative reservoir was brought to 30° to 50°C. Using an Accuratio dispersing and metering system and a Cincinnati Milacron mixing head, the two streams were brought under high pressure of about 10.3 MPa (1500 psi) to the mix head. (Mix Ratio=3.5±0.2 to 1 Resin: Curative). The mix head was then opened on a predetermined signal and the two sterams flowed together under turbulent mixing conditions and then allowed to flow directly into the mould. After about 60—300 seconds (i.e., 90 seconds) at about 80° to about 160°C (usually 131°C), the mould was opened and the part removed. Most of the experimental work was done with a 20 cm×25 cm×0.3 cm (8"×10"×1/8") flat plaque steel mould wherein the mould was sprayed with a suitable mould release agent (e.g., IMS-416, a silicone type) prior to charging.

The above cured RIM composition exhibited the following physical properties:

| | | |
|---|---|---|
| Tens. Str. (MPa) | 69 | ($10.0\times10^3$ psi) |
| Tens. Modulus (MPa) | 2966 | ($4.30\times10^3$ psi) |
| Elong. (%) | 6 | |
| Flex Str. (MPa) | 99 | ($14.0\times10^3$ psi) |
| Flex Mod. (MPa) | 2745 | ($3.98\times10^5$ psi) |
| % Mod. Retention (120°/30°) | 54 | |
| N.I. Impact (J/m) | 24 | (0.44 ft lb/in) |
| Inst. Impact (J) | 4.4 (2.9)[a)] | (39 (26)[a)] in lb) |
| HDT (°C, 1.8 MPa) | 118 (121)[a)] | |
| Heat Sag (cm). 1h/121°C<br>+1h/163°C | (0.13)[a)]<br>(0.91)[a)] | |
| Coefficient of linear thermal expansion (CLTE) (m/m/°C) | $17\times10^{-6}$ | |

[a)] Moulded at 152°C

Example II

The procedure of Example I was essentially repeated using the following formulation:

| | |
|---|---|
| Epoxy compound (A) | Epoxy Resin A |
| Amino compound (B) | V-140 polyamide |
| $Ca(NO_3)_2 4H_2O$ | ≤1.5 phr |
| PEG-400 | 1 phr |
| Mix Ratio (A:B) | 1.85:1.0 w/w |
| Mould Temperature | 122°C |

The physical properties of the cured composition were as follows:

| | | |
|---|---|---|
| Tens. Str. (MPa) | 49 | ($7.1\times10^3$ psi) |
| Tens. Modulus (MPa) | 2690 | ($3.90\times10^5$ psi) |
| Elongation (%) | 8 | |
| Flex Str. (MPa) | 79 | ($11.4\times10^3$ psi) |
| Flex Mod. (MPa) | 2248 | ($3.26\times10^5$ psi) |
| % Mod. Retention (80°/30°) | 40 | |
| N.I.[a] Impact (J/m) | 30 | (0.55 ft lb/in) |
| Inst. Impact (J) (~3 kph) | 2.3 | (20 in lb) |
| HDT (°C, 1.8 MPa) | 72 | (67)[b] |
| Heat Sag (cm). 1h/121°C | 0.48 | |
| +1h/163°C | 0.64 | |

[a] Notched Izod
[b] Moulded at 134°C

Example III

The procedure of Example I was essentially repeated using the following formulation:

| | |
|---|---|
| Epoxy compound (A) | Epoxy Resin A |
| Amino compound (B) | A 50:50 equivalent mixture of cyclohexane-diamine and V-140 |
| Mix Ratio (A:B) | 2.8:1.0 w/w. |
| $Ca(NO_3)_2 . 4H_2O$ | ≤1.5 phr |
| PEG-400 | 1.0 phr |
| Mould Temperature | 122°C |

The physical properties of the cured composition were as follows:

| | | |
|---|---|---|
| Tens. Str. (MPa) | 58 | ($8.4\times10^3$ psi) |
| Tens. Modulus (MPa) | 2793 | ($4.05\times10^5$ psi) |
| Elongation (%) | 5 | |
| Flex Str. (MPa) | 84 | ($12.2\times10^3$ psi) |
| Flex Mod. (MPa) | 2241 | ($3.25\times10^5$ psi) |
| % Mod. Retention (80/30°) | 67 | |
| N.I. Impact (J/m) | 25 | (0.46 ft lb/in) |
| Inst. Impact (J) | 1.6 | (14 in lb) |
| HDT (°C, 1.8 MPa) | 90 | (93)[a] |
| Heat Sag (cm). 1h/121°C | (0.50—0.79)[a] | |
| +1h/163°C | (0.43—0.87)[a] | |
| CLTE (m/m/°C) | ($19\times10^{-6}$)[a] | |

[a] Moulded at 140°C

Example IV

The procedure of Example 1 was essentially repeated using the following formulation:

| | |
|---|---|
| Epoxy compound | 75 pbw Epoxy Resin A<br>25 pbw Epoxy Resin B |
| Amino compound | PACM-20 |
| $Ca(NO_3)_2 . 4H_2O$ | ≤1.5 phr |
| PEG 400 | 1 phr |
| Mix Ratio | 4.0:1.0 w/w |
| Mould Temperature | 130°C |

The physical properties of the cured composition were as follows:

| | | |
|---|---|---|
| Tens. Str. (MPa) | 68 | ($9.9\times10^3$ psi) |
| Tens. Modulus (MPa) | 2638 | ($3.89\times10^5$ psi) |
| Elongation (%) | 7 | (10[a]) |
| Flex Str. (MPa) | 99 | ($14.3\times10^3$ psi) |
| Flex Mod. (MPa) | 2862 | ($4.15\times10^5$ psi) |
| % Mod. Retention (80°/30°) | 32 | |
| N.I. Impact (J/m) | 29 | (0.52 ft lb/in) |
| Inst. Impact (J) | 2.5 (4.0)[a)] | (22 (35)[a)] in lb) |
| HDT (°C, 1.8 MPa) | 102 (102)[a)] | |
| Heat Sag (cm). 1h/121°C<br>+1h/163°C | 0.48—0.69<br>0.64—0.76 | |
| CLTE (m/m/°C) | $13\times10^{-6}$ | |

[a)] Moulded at 150°C

Example V

An Acurratio reaction injection moulding (RIM) machine equipped with a Cincinnati Milacron variable ratio mixing head, a stainless steel mould consisting of a fan-shaped spreader section and a 23 cm×28 cm×0.3 cm (9″×11″×1/8″) plate mould, and two 5-gallon stainless steel vessel (pots) equipped with stirrer and nitrogen and vacuum lines were employed.

Into one vessel (Vessel A) were charged 7853 grams of Epoxy Resin A and 4300 grams of styrene. Into the other vessel (Vessel B) were charged 4014 grams of PACM-20 and 4300 grams of styrene. Both vessels were stirred at ambient temperature for 20 minutes after vacuum and nitrogen passage. The RIM machine was cycled at low pressure for thirty minutes and then 1100 grams of styrene in which 120 grams of "Lupersol 256" (2,5-dimethyl-2,5-bis(2-ethylhexanoylperoxy)hexane), 90 grams of $Ca(NO_3)_2 . 4H_2O$ and 80 grams of PEG-400 were added to Vessel A. Low pressure circulation was continued for another 30 minutes. The RIM machine was adjusted to provide a weight ratio of components from Vessel A to Vessel B of 2.98:1.00.

The mould was filled with an overflow vessel and evacuator and heated to 65°C. The RIM machine was operated to produce a 1.55 second shot of the above A/B blend into the mould. The pressure on the A side was about 4.1 MPa and on the B side, about 6.9 MPa.

The moulded part was held at 65°C for one hour. Then the temperature of the mould was raised to 140°C over an hour period and allowed to cool.

The moulded specimen (Specimen A) had the following composition:

| Components | Parts by weight |
|---|---|
| Epoxy Resin A | 100 |
| Styrene | 100 |
| "Lupersol 256" | 1.5 |
| PACM-20 | 29 |
| $Ce(NO_3)_2 . 4H_2O$ | 1.0 |
| PEG-400 | 1.0 |

The above procedure was essentially repeated except that no $Ca(NO_3)_2 . 4H_2O$ and no PEG-400 were added to the formulation. The resulting moulded specimen is hereinafter referred to as Specimen B.

The properties of the moulded specimens are as follows:

| Physical properties | Specimen A | Specimen B |
|---|---|---|
| HDT, °C | 91 | 83 |
| Elongation to break, % | 3 | 2.2 |
| Tensile yield, MPa (psi) | 62.4 (9,050) | 43.5 (6,300) |
| Young's Modulus, MPa (psi) | 3,150 (457,000) | 2,630 (381,000) |
| Shear Modulus via Rheometric Force Tension, MPa (psi) | 1,080 (156,000) | 890 (129,000) |
| Retention of Shear Modulus at 70°C, % | 80 | 66.2 |
| Izod (Notched) J/m (ft-lb/in) | 23.5±1 (0.44±0.02) | 16.6±6.4 (0.31±0.12) |
| Impact (Charpy) J/m (ft-lb/in) | 18.2±6.4 (0.34±0.12) | 53±21 (0.99±0.40) |
| Impact (Rheometric Instrumental impact) J (in lb) | 2.7 (24) | 0.9 (8) |

Example VI

The procedures of Example V were essentially repeated wherein the styrene was a blend of styrene and divinyl benzene on a 83:17 weight basis and the "Lupersol 256" was reduced to 1.2 pbw from 1.5 pbw.

The cured moulded specimen exhibited the following physical properties:

| | |
|---|---|
| HDT, °C | >100 |
| Shear Modulus, MPa (psi) | 1000 (145,000) |
| Retention of Shear Modulus, % | 92 |
| Instrumental Impact, E, J (in lb) at 3 kph impact velocity | 0.8 (7) |

Example VII

Using Accuratio Micro RIM-II equipment, the Resin (A) and Curative (B) reservoirs were charged, respectively, with about 4,000 g of the following mixtures (Theoretical Mix Ratio=3.7 (w/w)).

| A (Res. T=56°C) | B (Res. T=58°C) |
|---|---|
| 100 g Epoxy Resin A | 28 g PACM-20 |
| 43 g Styrene | 10 g Nonyl phenol |
| 1.0 g PEG-400≤1.4 g $Ca(NO_3)_2 . 4H_2O$ | 2 g Trimethylolpropanetrimethacrylate (TMPTMA) |
| 1.0 g *t*-butylperoxybenzoate | |
| 1.0 g NP (Nonyl phenol) | |

These components were processed by reinforced reaction injection moulding RRIM techniques using mix ratios of A:B of 4.0—4.7 A to 1.0 of B and mould temperatures of 130°C to 150°C with in-mould times of 2 to 4 minutes. Continuous glass fabric (2 ply of preform triaxial glass mat and 2 ply of "OC 8610" continuous strand glass mat) weighing about 200 g was placed in a 30 cm×30 cm (12"×12") plaque mould and the above system was injected into the mould. A plaque made at 4.65 mix ratio was moulded for 2 minutes at 148°C with 0.1 MPa (15 psi) back pressure on the mould after injection. The properties of this plaque were determined as follows:

| | |
|---|---|
| Elongation to Brk. % | 2.1 |
| Ult. Tens. MPa (psi) | 154 ($22.3\times10^3$) |
| Tens. Modulus, MPa (psi) | 9,940 ($1.44\times10^6$) |
| Impact (Instrumental), J (in lb) at 8 kph | 9.6 (84) |
| Flexural Strength, MPa (psi) | 18 ($2.6\times10^3$) |
| Flexural Modulus, MPa (psi) | $11\times10^3$ ($1.6\times10^6$) |

Example VIII

Using the same equipment as that of Example VII, the following compositions were charged, respectively, to the A and B reservoirs of the RIM machine. About 4000 g of material were charged to each reservoir.

| A (Res. T=45—50°C) | B (Res. T=30°C) |
|---|---|
| 100 g Epoxy Resin A | 28 g PACM-20 |
| 43 g Styrene≤1.4 g $Ca(NO_3)_2 . 4H_2O$ | 2.0 g TMPTMA |
| 1.0 g PEG-400 | |
| 1.0 g *t*-butylperoxybenzoate | (Theoretical Mix Ratio=4.9) |

These mixtures (A and B) were processed by RIM techniques at a Mix Ratio of 5.4, and 3 plaques (A, B, C) were moulded as shown below. The mechanical physical properties are tabulated below:

| Properties | Plaque: Min/°C: | A 4'/145°C | B 4'/132°C | C 2'/150°C |
|---|---|---|---|---|
| Flexural Strength, MPa (psi) | | 278 (40,300) | 268 (38,900) | 203 (29,400) |
| Flexural Modulus, MPa (psi) | | 13,000 (1,885,000) | 13,200 (1,914,000) | 11,800 (1,711,000) |

**Claims**

1. The application of heat-curable compositions, comprising:

(1) an epoxy compound having an average more than one epoxy group per molecule;

(2) a curing amount of at least one amino compound containing at least three amino hydrogen atoms per molecule;
(3) a catalytic amount of a Group I or Group II metal salt selected from the group consisting of nitrates, iodides, thiocyanates, alkoxides, and perchlorates, and sulphonates; and
(4) a polyalkylene ether glycol,

in a reaction injection moulding process.

2. A process according to claim 1, wherein the metal salt is selected from the group consisting of nitrates, iodides, thiocyanates, alkoxides, and perchlorates and there is additionally included into the composition:

(5) a miscible amount of at least one ethylenically unsaturated monomer, and
(6) a peroxide free-radical initiator.

3. A process according to claim 2, wherein the ethylenically unsaturated monomer comprises styrene.

4. A process according to any one of claims 1 to 3, wherein the epoxy compound comprises a glycidyl polyether of a polyhydric phanol.

5. A process according to claim 4, wherein the epoxy compound comprises a glycidyl polyether of 2,2-bis(4-hydroxyphenyl)propane.

6. A process according to any one of claims 1 to 5, wherein the amino compound comprises a cycloaliphatic diamine.

7. A process according to any one of claims 1 to 5, wherein the amino compound comprises a polyamide.

8. A process according to any one of claims 1 to 7, wherein the polyalkylene ether glycol is a polyethylene glycol with an average molecular weight of from 200 to 600.

**Patentansprüche**

1. Anwendung von heiß-härtbaren Massen, umfassend

(1) eine Epoxyverbindung mit im Mittel mehr als einer Epoxygruppe im Molekül;
(2) eine härtende Menge mindestens einer Aminoverbindung, enthaltend zumindest drei Aminowasserstoffatome im Molekül;
(3) eine katalytische Menge eines Salzes eines Metalls der Gruppe I oder II, ausgewählt aus der Gruppe bestehend aus Nitraten, Iodiden, Thiocyanaten, Alkoxiden und Perchloraten und Sulfonaten und
(4) ein Polyalkylen-ether-glykol

bei einem Reaktions-Spritzgußverfahren.

2. Verfahren nach Anspruch 1, wobei das Metallsalz ausgewählt ist aus der Gruppe bestehend aus Nitraten, Iodiden, Thiocyanaten, Alkoxiden und Perchloraten und zusätzlich in der Masse enthalten ist:

(5) eine einmischbare Menge mindestens eines ethylenisch ungesättigten Monomeren und
(6) ein freie Radikale liefernder Peroxid-Initiator.

3. Verfahren nach Anspruch 2, wobei das ethylenisch ungesättigte Monomer Styrol umfaßt.

4. Verfahren nach einem der Ansprüche 1 bis 3, wobei die Epoxyverbindung einen Glycidyl-polyether eines mehrwertigen Phenols umfaßt.

5. Verfahren nach Anspruch 4, wobei die Epoxyverbindung einen Glycidyl-polyether von 2,2-Bis(4-hydroxyphenyl)propan umfaßt.

6. Verfahren nach einem der Ansprüche 1 bis 5, wobei die Aminoverbindung ein cycloaliphatisches Diamin umfaßt.

7. Verfahren nach einem der Ansprüche 1 bis 5, wobei die Aminoverbindung ein Polyamid umfaßt.

8. Verfahren nach einem der Ansprüche 1 bis 7, wobei das Polyalkylen-ether-glykol ein Polyethylenglykol mit einem mittleren Molekulargewicht von 200 bis 600 ist.

**Revendications**

1. Application de compositions thermodurcissables, comprenant:

(1) un composé époxy avant en moyenne plus d'un groupe époxy par molécule;
(2) une quantité réticulante d'au moins un composé amino contenant au moins trois atomes d'hydrogène d'amino par molécule;
(3) une quantité catalytique d'un sel de métal du groupe I ou du groupe II choisi dans le groupe constitué par les nitrates, iodures, thiocyanates, alcoxydes, et perchlorates et sulfonates; et
(4) un polyalcoylène-éther-glycol

dans un procédé de moulage réactif par injection.

2. Procédé selon la revendication 1, où le sel métallique est choisi dans le groupe constitué par les nitrates, iodures, thiocyanates, alcoxydes, et perchlorates et où l'on inclut en outre dans la composition:

(5) une quantité miscible d'au moins un monomère éthyléniquement non saturé, et
(6) un inducteur de radicaux libres peroxyde.

3. Procédé selon la revendication 2, où le monomère éthyléniquement non saturé comprend du styrène.

4. Procédé selon l'une quelconque des revendications 1 à 3, où le composé époxy comprend un glycidyl-polyéther d'un phénol polyhydrique.

5. Procédé selon la revendication 4, où le composé époxy comprend un glycidylpolyéther de 2,2-bis(4-hydroxyphényl)propane.

6. Procédé selon l'une quelconque des revendications 1 à 5, où le composé amino comprend un polyamide une diamine cycloaliphatique.

7. Procédé selon l'une des revendications 1 à 5, où le composé amino comprend un polyamide.

8. Procédé selon l'une quelconque des revendications 1 à 7, où le polyalcoylèneéther-glycol est un polyéthylène-glycol avec un poids moléculaire moyen allant de 200 à 600.